# EUROPÄISCHE PATENTANMELDUNG

(11) **EP 1 298 447 A2**
(43) Veröffentlichungstag der Anmeldung: **02.04.2003**
(21) Anmeldenummer: 02102067.2
(22) Anmeldetag: 29.07.2002
(51) Int. Cl.: G01S 5/04

(54) **GPS-Empfangsmodul**

(30) Priorität: 02.08.2001 DE 10137838
(71) Anmelder: Philips Corporate Intellectual Property GmbH, 20099 Hamburg (DE); Koninklijke Philips Electronics N.V., 5621 BA Eindhoven (NL)
(72) Erfinder: Hilgers, Achim, Postfach 50 04 42 D-52088, Aachen (DE); Ghosh, Indra, Postfach 50 04 42 D-52088, Aachen (DE)
(74) Vertreter: Volmer, Georg, Dipl.-Ing.

(57) **Zusammenfassung**

Es wird ein GPS-Empfangsmodul (1) zum Empfangen von GPS-Signalen und zum Ermitteln von Positionsdaten daraus beschrieben, das sich insbesondere auszeichnet durch ein Kommunikations-Untermodul (3), dem die ermittelten Positionsdaten zuführbar sind und mit dem diese Daten in ein zum Übertragen an ein externes Gerät geeignetes Format umwandelbar sind. Das Kommunikations-Untermodul (3) ist dabei vorzugsweise ein Bluetooth (BT)-Untermodul, mit dem die Positionsdaten nach dem Bluetooth-Standard umgesetzt und drahtlos übertragen werden können. Weiterhin wird eine insbesondere zur Anwendung mit dem GPS-Empfangsmodul geeignete Dualband-Antenne beschrieben, mit der nicht nur GPS-Signale empfangen werden können, sondern über die auch eine Kommunikationsverbindung mit externen Geräten hergestellt werden kann.

## Beschreibung

Die Erfindung betrifft ein GPS (Global Position System)- Empfangsmodul zum Empfangen von GPS-Signalen und zum Ermitteln von Positionsdaten daraus, sowie eine Dualband-Antenne für ein solches Empfangsmodul.

GPS-Signale dienen bekanntlich zur weltweiten Positionsbestimmung und Navigation und werden von einem Satellitenverbund von insgesamt 24 Satelliten ausgestrahlt, die auf verschiedenen Umlaufbahnen die Erde so umkreisen, dass an jeder Stelle der Erdoberfläche zu jeder Zeit mindestens fünf Satelliten sichtbar.

Die Positionsbestimmung beruht dabei auf dem Prinzip einer Laufzeitmessung von Signalen, die elektromagnetischen Trägerwellen mit einer Trägerfrequenz von *1575,42* MHz aufmoduliert sind. Die von den Satelliten ausgesendeten Signale sind zeitsynchronisiert und bestehen aus zwei Teilen. In einem ersten Teil sind die jeweiligen Satellitenpositionen und die Uhrzeit enthalten, mit der sich eine Uhr in dem GPS-Empfänger synchronisiert. Anhand des zweiten Teils ermittelt der GPS-Empfänger die Bahndaten der Satelliten, die momentan empfangen werden können. Daraus wird dann die Position des GPS-Empfängers berechnet.

GPS-Empfangsmodule, die die dafür erforderliche Empfangs- und Auswerteelektronik enthalten, sind bekannt. In Abhängigkeit von dem für das Modul vorgesehenen Anwendungszweck werden die Positionsdaten entweder an einer Schnittstelle zur weiteren Verarbeitung in anderen Einheiten zur Verfügung gestellt, oder das Modul weist eine integrierte Anzeigeeinheit für die Positionsdaten auf. Module dieser Art sind zum Beispiel in mobile und stationäre Navigationsgeräte für Anwendungen in der Luftfahrt, Seefahrt und im Straßenverkehr eingebaut.

Da die GPS-Module immer kleiner und kostengünstiger werden, besteht das Bestreben, diese auch in Geräte einzubauen, die nicht typischerweise der Navigation dienen, wie zum Beispiel Mobiltelefone, tragbare Rechner und Armbanduhren. Die Integration eines GPS-Moduls in ein solches Gerät erfordert allerdings in vielen Fällen auch weitgehende Eingriffe in die Elektronik des Gerätes an sich, wenn zum Beispiel Eingaben für das GPS-Modul über eine Tastatur des Gerätes vorgenommen oder Positionsdaten an einem Display des Gerätes angezeigt werden sollen.

Eine Aufgabe, die der Erfindung zugrunde liegt, besteht deshalb darin, in diesen Fällen Abhilfe zu schaffen und eine einfachere Möglichkeit zur Anbindung von GPS-Empfangsmodulen an andere elektronische Geräte aufzufinden.

Insbesondere soll mit der Erfindung ein GPS-Empfangsmodul geschaffen werden, das universell mit einer Vielzahl von anderen Geräten zusammenwirken kann.

Schließlich soll mit der Erfindung auch ein integriertes GPS-Empfangsmodul geschaffen werden, das alle zum Empfang, zur Auswertung und zur Kommunikation mit einem der oben genannten Geräte benötigten Einheiten beinhaltet.

Weiterhin soll mit der Erfindung eine Dualband-Antenne geschaffen werden, die insbesondere zur Integration mit einem solchen GPS-Empfangsmodul geeignet ist und mit der nicht nur die GPS-Signale empfangen werden können, sondern über die auch eine Kommunikationsverbindung mit den genannten Geräten hergestellt werden kann.

Gelöst wird die Aufgabe mit einem GPS-Empfangsmodul, das sich gemäß Anspruch 1 durch ein Kommunikations-Untermodul auszeichnet, dem die ermittelten Positionsdaten zuführbar sind und mit dem diese Daten in ein zum Übertragen an ein externes Gerät geeignetes Format umwandelbar sind.

Ein Vorteil dieser Lösung besteht darin, dass damit die Verwendung von GPS-Empfangsmodulen mit solchen externen Geräten ermöglicht wird, die über eine entsprechende Schnittstelle für dieses Format verfügen.

Besonders vorteilhaft ist hierfür gemäß Anspruch 2 ein Kommunikationsmodul nach dem Bluetooth-Standard, da immer mehr Geräte standardmäßig mit einer Bluetooth-Schnittstelle ausgestattet werden.

Die Ausführung gemäß Anspruch 3 hat den Vorteil, dass das GPS-Empfangsmodul nicht nur GPS-Signale, sondern auch Daten von anderen externen Geräten empfangen und ggf. entsprechend gesteuert werden kann.

Die Ausführung gemäß Anspruch 4 ist in besonderem Maße miniaturisierbar, während die Ausführungen gemäß den Ansprüchen 5 und 6 auch eine drahtgebundene Übertragung von Daten zwischen dem GPS-Empfangsmodul und einem externen Gerät ermöglichen, die keine Schnittstelle nach dem Bluetooth-Standard aufweisen.

Eine Dualband-Antenne, die in besonderer Weise zur Integration mit dem GPS-Empfangsmodul geeignet ist, zeichnet sich gemäß Anspruch 7 durch folgende Merkmale aus: ein keramisches Substrat mit einer ersten resonanten Leiterbahnstruktur sowie einer zweiten resonanten Leiterbahnstruktur, die mit einer gemeinsamen Zuführung verbunden sind, wobei die Länge der ersten Leiterbahnstruktur etwa der halben Wellenlänge eines BT-Signals in dem Substrat und die Länge der zweiten Leiterbahnstruktur etwa der halben Wellenlänge eines GPS-Signals in dem Substrat entspricht.

An dieser Stelle sei erwähnt, dass aus der EP 1 079 463 zwar "asymmetrische Dipolantennen" bekannt sind, die auch für den Betrieb im GPS- oder BT-Band vorgesehen sind. Es handelt sich hierbei jedoch um Mikrostreifenleitungs-Antennen, bei denen eine ein Bezugspotential bildende metallische Fläche (i.a. auf der Rückseite des Substrates) vorhanden sein muss. Da die erfindungsgemäßen Antennen jedoch nach dem Prinzip der Drahtantennen arbeiten, ist dieser Stand der Technik ersichtlich nicht einschlägig.

Weitere Einzelheiten, Merkmale und Vorteile der Erfindung ergeben sich aus der folgenden Beschreibung von bevorzugten Ausführungsformen anhand der Zeichnung. Es zeigt:
- Fig. 1: eine schematische Darstellung einer ersten Ausführungsform des GPS-Empfangsmoduls;
- Fig. 2: eine schematische Darstellung einer zweiten Ausführungsform des GPS-Empfangsmoduls;
- Fig. 3: eine Ausführungsform einer erfindungsgemäßen Dualband-Antenne; und
- Fig. 4: ein Impedanzspektrum der Antenne gemäß Figur 3.

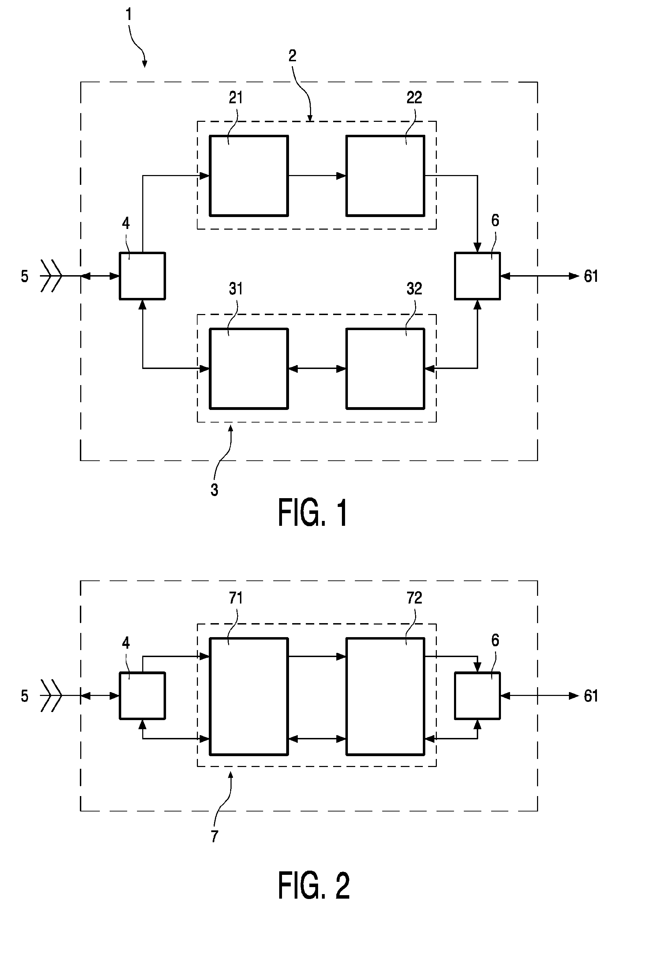

Figur 1 zeigt eine erste Ausführungsform des erfindungsgemäßen GPS-Empfangsmoduls 1, das ein GPS-Untermodul 2 sowie ein Kommunikations-Untermodul 3, das nach dem bekannten Bluetooth (BT)-Standard arbeitet, beinhaltet.

Das GPS-Untermodul 2 weist einen HF-Schaltungsteil 21 zum Empfangen von GPS-Signalen (im allgemeinen auf der Trägerfrequenz 1575,42 MHz) und zum Umsetzen dieser Signale in niederfrequente Positionssignale auf. Diese Positionssignale werden mit einem an das HF-Schaltungsteil 21 angeschlossenen GPS-Basisband-Schaltungsteil 22 in für einen Nutzer auswertbare Positionsdaten umgewandelt. Zu diesem Zweck sind verschiedene Signalverarbeitungsverfahren bekannt, die hier nicht näher erläutert werden sollen.

Das BT-Untermodul 3 beinhaltet ein HF-Schaltungsteil 31 zum Empfangen und zum Senden von Signalen im Bluetooth-Band (BT-Band), das etwa im Frequenzbereich zwischen 2400 und 2483,5 MHz liegt, sowie ein BT-Basisband-Schaltungsteil 32, das mit dem HF-Schaltungsteil 31 bidirektional verbunden ist und mit dem die zu sendenden bzw. empfangenen BT-Signale nach dem BT-Standard codiert bzw. decodiert sowie gegebenenfalls komprimiert bzw. dekomprimiert werden. Auch hierfür sind Signalverarbeitungsverfahren bekannt, so dass auf eine Erläuterung verzichtet werden kann.

Die beiden HF-Schaltungsteile 21, 31 der Untermodule 2, 3 sind über einen Umschalter 4 mit einer Dualband-Antenne 5 verbindbar. Die Antenne 5 dient dabei zum Empfangen von GPS-Signalen sowie zum Empfangen und Senden von Signalen im Bluetooth-Band.

Die beiden Basisband-Schaltungsteile 22, 32 der Untermodule 2, 3 sind mit einer Interface-Schaltung 6 verbunden, über die die Untermodule 2, 3 miteinander sowie über eine externe Drahtverbindung 61 mit einem externen Gerät (nicht dargestellt) Daten austauschen können. Die beiden Untermodule 2, 3 sind als selbständig arbeitende Einheiten ausgelegt.

Mit dem GPS-Untermodul 2 können somit GPS-Signale empfangen, umgesetzt und in Positionsdaten umgewandelt werden, die dann über die Interface-Schaltung 6 dem BT-Untermodul 3 zugeführt werden, um diese Daten nach Umwandlung in nach dem BT-Standard codierte Signale über die Antenne 5 an ein anderes Gerät zu übertragen (zum Beispiel einen Computer, ein Mobiltelefon usw.), das eine Schnittstelle zum Empfangen und Decodieren von BT-codierten Signalen aufweist.

Alternativ dazu können die Positionsdaten über die Interface-Schaltung 6 und die externe Drahtverbindung 61 auch solchen Geräten (zum Beispiel eine Anzeigeeinheit) zugeführt werden, die keine Bluetooth-Schnittstelle aufweisen.

Weiterhin können über die Antenne 5, den Umschalter 4 sowie das zweite Untermodul 3 auch nach dem BT-Standard codierte Bluetooth-Signale von anderen Geräten empfangen werden, die dann in ein Basisband umgesetzt, decodiert und über die Interface-Schaltung 6 und die externe Drahtverbindung 61 einem angeschlossenen Gerät zur Steuerung und /oder Datenübermittlung zugeführt werden. Die Interface-Schaltung 6 kann umgekehrt auch zur drahtgebundenen Übertragung von Daten von einem externen Gerät zu dem Untermodul 3 ausgelegt sein.

Figur 2 zeigt eine zweite Ausführungsform des erfindungsgemäßen Moduls 1, bei dem die in Figur 1 gezeigten separaten Untermodule 2, 3 zu einem gemeinsamen Untermodul 7 kombiniert sind.

Dieses Untermodul 7 umfasst ein jeweils für GPS-Signale und BT-Signale gemeinsames HF-Schaltungsteil 71 sowie ein gemeinsames Basisband-Schaltungsteil 72, wobei das Schaltungsteil 71 die Funktionen der Schaltungsteile 21 und 31 und das Schaltungsteil 72 die Funktionen der Schaltungsteile 22 und 32 gemäß Figur 1 vereinen.

Darüber hinaus ist ebenso wie bei der ersten Ausführungsform auch hier ein Umschalter 4 sowie eine Dualband-Antenne 5 vorgesehen, über die GPS-Signale und BT-Signale empfangen und BT-Signale gesendet werden können. Schließlich ist auch bei dieser zweiten Ausführungsform eine Interface-Schaltung 6 vorhanden, über die mittels der externen Drahtverbindung 61 andere Geräte bidirektional gemäß obiger Erläuterung angeschlossen werden können.

Die grundsätzliche Funktion und Anwendbarkeiten dieser zweiten Ausführungsform sind die gleichen, wie diejenigen der ersten Ausführungsform, so dass darauf nicht noch einmal eingegangen werden soll.

Ein besonderer Vorteil dieser zweiten Ausführungsform besteht darin, dass sie sich in noch stärkerem Maße miniaturisieren lässt, so dass sich auch eine weitere Reduzierung der Herstellungskosten sowie eine Erweiterung des Anwendungsbereiches ergibt.

Die Antenne 5 ist vorzugsweise eine keramische Dualband-Antenne, über die sowohl die GPS-Signale und die BT-Signale empfangen, als auch die BT-Signale gesendet werden können. Eine solche, für das erfindungsgemäße GPS-Empfangsmodul 1 besonders geeignete Antenne soll im folgenden beschrieben werden.

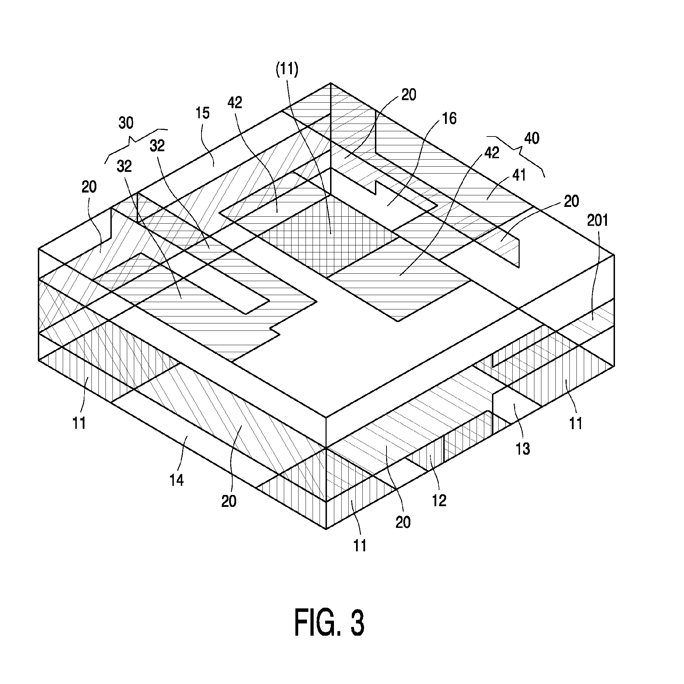

Figur 3 zeigt den schematischen Aufbau einer solchen Antenne.

Diese Antenne ist vom Grundtyp eine sogenannte "Printed Wire Antenne", bei der auf ein Substrat eine oder mehrere Leiterbahnen aufgebracht sind. Prinzipiell handelt es sich bei diesen Antennen somit um Drahtantennen, die im Gegensatz zu Mikrostreifenleitungs-Antennen keine ein Bezugspotential bildende metallische Fläche auf der Rückseite des Substrates aufweisen.

Die beschriebene Ausführungsform weist ein keramisches Substrat aus einem im wesentlichen quaderförmigen Block auf, dessen Höhe etwa um einen Faktor 3 bis 10 kleiner ist, als dessen Länge oder Breite. Davon ausgehend soll in der folgenden Beschreibung die in der Darstellung der Figur 3 jeweils obere bzw. untere (große) Fläche des Substrates als erste obere bzw. zweite untere Stirnfläche und die demgegenüber senkrechten Flächen (Umfang des Substrates) als erste bis vierte Seitenfläche bezeichnet werden.

Alternativ dazu ist es allerdings auch möglich, anstelle eines quaderförmigen Substrates andere geometrische Formen wie zum Beispiel eine Zylinderform zu wählen, auf die zwei resonante Leiterbahnstrukturen mit zum Beispiel spiralförmigem Verlauf aufgebracht ist.

Die Substrate können durch Einbetten eines keramischen Pulvers in eine Polymermatrix hergestellt werden und haben eine Dielektrizitätszahl von εᵣ > 1 und / oder eine Permeabilitätszahl von µᵣ > 1.

Im einzelnen umfasst die Antenne gemäß Figur 1 ein quaderförmiges Substrat 10, das an den Ecken seiner unteren Stirnfläche mit mehreren Lötpunkten 11 versehen ist, mit denen es durch Oberflächenmontage (SMD-Technik) auf eine Schaltungsplatine aufgelötet werden kann. Weiterhin befindet sich an der unteren Stirnfläche im Bereich der Mitte einer ersten Seitenfläche 13 eine Zuführung 12 in Form eines Metallisierungsstücks, das bei der Montage auf einer Schaltungsplatine auf einen entsprechenden Leiterbereich gelötet wird, über den die elektromagnetische Energie von und zu der Antenne geführt wird.

Auf die Oberfläche des Substrates 1 sind zwei resonante Leiterbahnstrukturen 20, 30; 20, 40 aufgebracht, die über die gemeinsame Zuführung 12 mit einer Schaltungsplatine verbunden sind.

Die erste Leiterbahnstruktur ist durch eine am Umfang des Substrates verlaufende Leiterbahn 20 sowie eine erste Metallisierungsstruktur 30 auf der in der Darstellung oberen (ersten) Stirnfläche des Substrates 1 gebildet und im Hinblick auf ihre resonante Länge auf das Frequenzband der BT-Signale abgestimmt. Die zweite Leiterbahnstruktur ist durch die Leiterbahn 20 sowie eine zweite Metallisierungsstruktur 40 auf der ersten Stirnfläche des Substrates gebildet und im Hinblick auf ihre resonante Länge auf das Frequenzband der GPS-Signale abgestimmt.

Die effektive Länge der beiden Leiterbahnstrukturen zwischen der Zuführung 12 und dem Ende Metallisierungsstruktur 30 bzw. 40 entspricht dabei etwa der halben Wellenlänge des BT- bzw. GPS-Signals in dem Substrat.

Ausgehend von der Zuführung 12 erstreckt sich vertikal bis auf etwa halbe Höhe der ersten Seitenfläche 13 ein erster Abschnitt der Leiterbahn 20, die sich dann in horizontaler Richtung entlang der ersten Seitenfläche 13 bis zu einer zweiten Seitenfläche 14 fortsetzt. Weiterhin geht von dem ersten Abschnitt eine im Vergleich zur Leiterbahn schmalere erste Abstimmstichleitung 201 aus, die sich entlang der ersten Seitenfläche 13 in zu der Leiterbahn 20 entgegengesetzter Richtung erstreckt.

Die Leiterbahn 20 verläuft weiter in horizontaler Richtung entlang der zweiten Seitenfläche 14 etwa auf deren halber Höhe sowie weiter entlang einer der ersten Seitenfläche 13 gegenüberliegenden dritten Seitenfläche 15 auf etwa halber Höhe. Die Leiterbahn 20 endet schließlich an der vierten Seitenfläche 16 und geht dort in eine sich entlang dieser Seitenfläche weiter erstreckende, gegenüber der Leiterbahn 20 schmalere zweite Abstimmstichleitung 202 über.

Die erste Metallisierungsstruktur 30 ist über eine erste Abzweigung an der dritten Seitenfläche 15 mit der Leiterbahn 20 verbunden.

Die erste Metallisierungsstruktur 30 umfasst auf der ersten Stirnfläche einen Leiterbahnabschnitt 31, der sich im wesentlichen in Richtung auf die Zuführung 12 erstreckt, sowie ein im wesentlichen rechteckiges, parallel dazu angeordnetes Metallisierungsplättchen 32, in das der Leiterbahnabschnitt 31 mündet.

Die zweite Metallisierungsstruktur 40 ist über eine zweite Abzweigung an der vierten Seitenfläche 15 mit dem Ende der Leiterbahn 20 verbunden.

Die zweite Metallisierungsstruktur 40 umfasst auf der ersten Stirnfläche einen Leiterbahnabschnitt 41, der sich entlang des Randes der oberen Stirnfläche im wesentlichen in Richtung auf die Zuführung 12 erstreckt, sowie ein im wesentlichen rechteckiges, parallel dazu angeordnetes Metallisierungsplättchen 42, in das der Leiterbahnabschnitt 41 mündet.

Mit den beiden Abstimmstichleitungen 201, 202 können durch geringfügiges Verkürzen oder Abtragen die Resonanzfrequenzen der ersten bzw. zweiten Leiterbahnstruktur 20, 30; 20, 40 verschoben und die Impedanzanpassungen optimiert werden. Dadurch kann auch der Einfluss verschiedenartiger Hardware-Konfigurationen wie zum Beispiel der HF-Abschirmung, des Gehäusematerials usw. auf die Lage der Resonanzfrequenzen sowie deren Einfluss auf die Impedanz in einfacher Weise ausgeglichen werden, so dass nicht für jeden konkreten Anwendungsfall die Leiterbahnstrukturen verändert werden müssen. Dies eröffnet auch die Möglichkeit, die erfindungsgemäße Dualband-Antenne nicht nur für das erfindungsgemäße GPS-Empfangsmodul, sondern als separates Bauteil für eine Vielzahl von Anwendungen anzubieten.

Bei einer möglichen Realisierung dieser Dualband-Antenne betragen die Abmessungen des Substrates 10 etwa 6 x 6 x 2,0 mm□. Das für das Substrat 10 gewählte Material hat eine Dielektrizitätszahl εᵣ = 18,55 und ein tanδ = 1,17 x 10⁻⁴. Dies entspricht etwa den HF-Eigenschaften einer kommerziellen NP0-K17 Keramik (Ca_{0,05}Mg_{0,95}TiO₃-Keramik). Die aufgedruckten Leiterbahnen wurde mittels Silberpaste hergestellt.

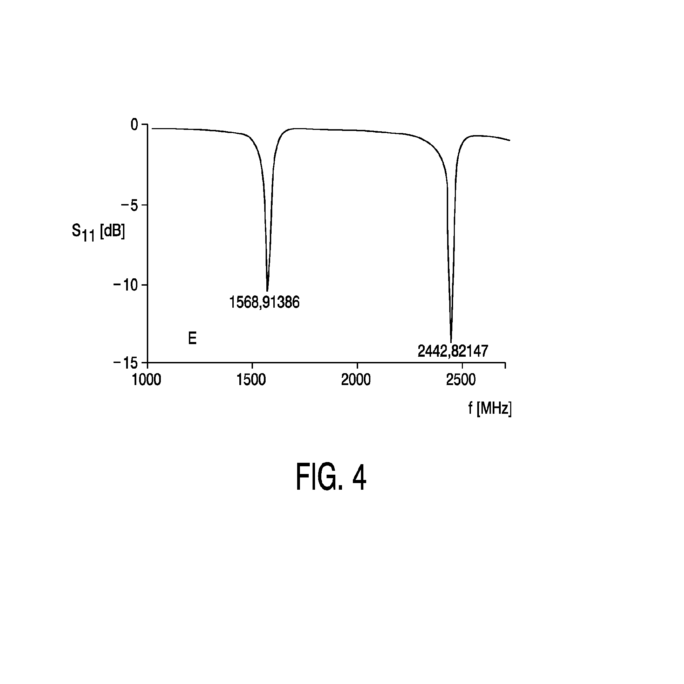

Figur 4 zeigt schließlich den Verlauf der Impedanz einer solchen Antenne über der Frequenz. Es sind deutlich die beiden Minima zu erkennen, die für die erste Leiterbahnstruktur 20, 30 für die Bluetooth-Signale bei 2442,82147 MHz und für die zweite Leiterbahnstruktur 20, 40 für die GPS-Signale bei 1568,91386 MHz liegen.

Das erfindungsgemäße GPS-Empfangsmodul 1 sowie die erfindungsgemäße Dualbandantenne sind vorzugsweise miteinander integriert und zum Beispiel auf eine gedruckte Schaltungsplatine montiert bzw. aufgelötet, die weitere Bauelemente des betreffenden Gerätes tragen kann. Ein solches Gerät kann insbesondere ein mobiles Telekommunikationsgerät wie zum Beispiel ein Handy sein, das zum Betrieb im GSM- oder UMTS-Band vorgesehen ist.

## Patentansprüche

1. GPS-Empfangsmodul zum Empfangen von GPS-Signalen und zum Ermitteln von Positionsdaten daraus,
**gekennzeichnet durch** ein Kommunikations-Untermodul (3), dem die ermittelten Positionsdaten zuführbar sind und mit dem diese Daten in ein zum Übertragen an ein externes Gerät geeignetes Format umwandelbar sind.

2. GPS-Empfangsmodul nach Anspruch 1,
**dadurch gekennzeichnet,**
**dass** das Kommunikations-Untermodul (3) ein Bluetooth (BT)-Untermodul ist, mit dem die Positionsdaten nach dem Bluetooth-Standard umgesetzt und drahtlos übertragen werden können.

3. GPS-Empfangsmodul nach Anspruch 2,
**dadurch gekennzeichnet,**
**dass** das BT-Untermodul (3) zum Empfangen und Decodieren von nach dem BT-Standard codierten Signalen ausgelegt ist.

4. GPS-Empfangsmodul nach Anspruch 2,
**gekennzeichnet durch** ein Untermodul (7) mit einem HF-Schaltungsteil (71) zum Verarbeiten von empfangenen GPS- und BT-Signalen sowie von zu sendenden BT-Signalen in mindestens einem HF-Band, sowie mit einem Basisband-Schaltungsteil (72) zum Verarbeiten von GPS- und BT-Signalen in mindestens einem Basisband.

5. GPS-Empfangsmodul nach Anspruch 1,
**gekennzeichnet durch** eine Interface-Schaltung (6), mit der die ermittelten Positionsdaten einem externen drahtgebundenen Gerät zuführbar sind.

6. GPS-Empfangsmodul nach Anspruch 5,
**dadurch gekennzeichnet,**
**dass** die Interface-Schaltung (6) zur drahtgebundenen Übertragung von Daten von einem externen Gerät zu dem Untermodul (3; 7) ausgelegt ist.

7. Dualband-Antenne, insbesondere zur Anwendung mit einem GPS-Empfangsmodul nach einem der Ansprüche 1 bis 6,
**gekennzeichnet durch** ein keramisches Substrat (10) mit einer ersten resonanten Leiterbahnstruktur (20, 30) sowie einer zweiten resonanten Leiterbahnstruktur (20, 40), die mit einer gemeinsamen Zuführung (12) verbunden sind, wobei die Länge der ersten Leiterbahnstruktur (20, 30) etwa der halben Wellenlänge eines BT-Signals in dem Substrat (10) und die Länge der zweiten Leiterbahnstruktur (20, 40) etwa der halben Wellenlänge eines GPS-Signals in dem Substrat (10) entspricht.

8. GPS-Empfangsmodul nach einem der Ansprüche 1 bis 6,
**gekennzeichnet durch** eine Dualband-Antenne (5) nach Anspruch 7.

9. Gedruckte Schaltungsplatine, insbesondere zur Oberflächenmontage von elektronischen Bauelementen,
**gekennzeichnet durch** ein GPS-Empfangsmodul (1) nach einem der Ansprüche 1 bis 6 sowie eine Dualband-Antenne (5) nach Anspruch 7.

10. Mobiles Telekommunikationsgerätes insbesondere für das GSM- oder UMTS-Band, **gekennzeichnet durch** eine gedruckte Schaltungsplatine nach Anspruch 9.
